# FASCICULE DE BREVET EUROPEEN

(11) **EP 2 836 745 B1**
(45) Date de publication et mention de la délivrance du brevet: **18.05.2016**
(21) Numéro de dépôt: 13720441.8
(22) Date de dépôt: 28.03.2013
(51) Int. Cl.: F16H 59/02, F16H 59/54

(54) **PROCEDE DE GESTION DE COMMANDE DE RETROGRADAGE D'UNE BOITE DE VITESSES AUTOMATIQUE, ET DISPOSITIF CORRESPONDANT**
VERFAHREN ZUR VERWALTUNG DER HERUNTERSCHALTSTEUERUNG EINES AUTOMATIKGETRIEBES UND ENTSPRECHENDE VORRICHTUNG
METHOD FOR DOWNSHIFT CONTROL MANAGEMENT OF AN AUTOMATIC GEARBOX, AND CORRESPONDING DEVICE

(30) Priorité: 11.04.2012 FR 1253301
(43) Date de publication de la demande: 18.02.2015
(73) Titulaire: Renault S.A.S., 92100 Boulogne-Billancourt (FR)
(72) Inventeur: PLANCHE, Grégory, 91400 Orsay (FR); DE BAUDUS, Pierre, 92240 Malakoff (FR)
(86) Numéro de dépôt international: PCT/FR2013/050681
(87) Numéro de publication internationale: WO 2013/153309

(56) Documents cités:
- EP-A2- 0 769 640
- EP-A2- 1 306 582
- FR-A1- 2 856 455
- JP-A- 2008 115 945
- US-A1- 2009 222 181

## Description

L'invention a pour objet les dispositifs de commande de boîtes de vitesses automatiques, et plus particulièrement les dispositifs de commande comprenant des actionneurs à retour élastique, comme par exemple des palettes de commande au volant, ou des leviers de vitesse aptes à détecter des commandes par impulsion.

Dans des véhicules destinés à une conduite « sportive », équipés de telles boîtes de vitesses automatiques, on souhaite permettre au conducteur d'enchaîner rapidement plusieurs rapports montants, plusieurs rapport descendants, voire permettre de passer d'un rapport directement à un rapport qui lui est supérieur -ou qui lui est inférieur- de plusieurs crans dans l'ordre logique de passage des rapports.

L'invention concerne plus particulièrement la possibilité d'enchaîner les rapports descendants ou de descendre de plusieurs rapports à la fois.

En fonction des durées de sollicitation de palette au volant ou de leviers de commande du véhicule, on peut convenir d'interpréter l'appui sur la palette ou sur le levier comme une demande d'effectuer un rétrogradage simple ou comme une demande d'effectuer un rétrogradage multiple.

La demande de brevet EP 1 801 465 propose ainsi d'utiliser un levier apte à se déplacer dans deux directions à partir d'une position de repos. Un appui court sur le levier est interprété comme une demande de changer de rapport vers le rapport immédiatement supérieur ou vers le rapport immédiatement inférieur, en fonction de la direction de déplacement du levier. Un appui long du levier est interprété comme une demande de passage des rapports de type n+2 ou de type n-2.

La demande de brevet FR 2 856 455, qui sert de base à la présentation en deux parties des revendications 1 et 10, propose d'effectuer des changements de rapport simples ou des changements de rapports multiples, en fonction de la durée d'appui sur un actionneur. En cas d'appui prolongé, plusieurs changements de rapport peuvent être enchaînés, séparés d'une pose de commutation dont la durée est déterminée en fonction de« la dynamique de marche momentanée ».

Le temps de pose de commutation peut éventuellement être réduit à zéro, et le passage de rapport est alors effectué vers le rapport le plus petit ou le plus grand possible. Des vérifications de sécurité sont effectuées pour interdire le changement de rapport si celui-ci devait amener la vitesse de rotation du moteur hors de ses bornes autorisées.

Lorsqu'un changement de rapport multiple a été interdit, le mode de changement de rapport revient en mode de changement de rapport simple. Dans la majorité des cas, le document propose donc d'enchaîner des changements de rapport simple, avec des temporisations entre chaque rapport qui varient en fonction des conditions de roulage.

Dans le mode de réalisation de FR 2 856 455 comme dans le mode de réalisation de EP 1 801 465, un appui involontairement prolongé dans le sens des rapports descendants peut provoquer un rétrogradage de rapport multiple que le conducteur n'attend pas forcément, et qui peut le prendre par surprise.

En outre, l'enchaînement des rétrogradages successifs n'est pas toujours effectué de manière optimale : ces rétrogradages sont effectués un par un dans la demande française à l'exception des cas où un rétrogradage vers le rapport minimal est autorisé; dans la demande de brevet européenne, les rétrogradages sont effectués deux par deux.

L'invention a pour but de proposer un dispositif de pilotage d'une boîte de vitesses automatique, permettant d'alterner de manière sécurisée entre mode de rétrogradage simple et mode de rétrogradage multiple, et permettant en outre de « sauter » plusieurs rapports si la vitesse du véhicule et le rapport couramment engagé le permettent.

A cette fin, il est proposé un dispositif de commande d'une boîte de vitesse automatique, comprenant une unité de commande électronique apte à détecter une demande d'un conducteur d'effectuer un rétrogradage simple d'un rapport de boîte ou un rétrogradage multiple de rapports de la boîte, l'unité de commande étant configurée pour recevoir un premier signal booléen d'appui de pédale de frein et un second signal booléen d'appui d'un actionneur à retour élastique, et pour délivrer un troisième signal booléen de demande de rétrogradage simple et un quatrième signal booléen de demande de rétrogradage multiple, caractérisé en ce que l'unité de commande électronique déclenche une temporisation lorsque l'actionneur est activé et la maintient tant que cet actionneur est activé, et émet un signal de rétrogradage multiple positif si et seulement si la temporisation atteint successivement une première borne de temps et une seconde borne de temps strictement supérieure à la première borne de temps, et si le frein et l'actionneur restent activés en continu entre la première borne de temps et la seconde borne de temps. On considère que le frein ou l'actionneur sont activés uniquement pendant la durée où une pression minimale de d'activation est exercée sur l'un ou sur l'autre. Les signaux booléens de demande de rétrogradage simple et de demande de rétrogradage multiple peuvent être délivrés à l'extérieur de l'unité de commande électronique, mais peuvent également être délivré à une sous unité de l'unité de commande électronique.

De manière préférentielle, l'unité de commande est configurée pour continuer à émettre un signal de rétrogradage multiple positif pendant toute la durée où l'actionneur reste actif au-delà de la seconde borne de temps.

Selon un mode de réalisation avantageux, l'unité de commande est configurée pour émettre un signal de rétrogradage simple positif si la temporisation atteint une troisième borne de temps mais n'atteint pas la seconde borne de temps, ou si la temporisation atteint la seconde borne de temps mais que le frein n'est pas actionné en continu entre la première borne de temps et la seconde borne de temps. L'unité de commande est configurée pour ne pas émettre de signal de rétrogradage simple positif dans les autres cas de figure.

Selon un mode de réalisation préféré, l'unité de commande est configurée pour n'émettre un signal booléen positif de rétrogradage simple que sous forme d'une impulsion de durée prédéfinie. On entend par là que la durée pendant laquelle le signal booléen de rétrogradage simple prend une valeur positive, ne dépend pas de la durée d'appui sur l'actionneur, au-delà de la durée nécessaire pour que ce signal booléen prenne une valeur positive.

Selon un mode de réalisation préférentiel, l'unité de commande est reliée à un capteur de vitesses de roues d'un véhicule et est configurée pour calculer, lorsque le signal de rétrogradage multiple est positif, un rapport de transmission minimum dans lequel elle autorise d'amener la boîte de vitesse, en fonction notamment de la vitesse de rotation des roues.

Dans ce mode de réalisation, l'unité de commande peut être configurée pour, si le signal de rétrogradage multiple est positif, effectuer un premier rétrogradage pour amener la boîte de vitesse au rapport de transmission minimum calculé juste avant le changement de rapport.

L'unité de commande peut être configurée pour, si le signal de rétrogradage multiple reste positif après le premier rétrogradage, continuer à calculer le rapport de transmission minimum, et pour effectuer un nouveau rétrogradage si ce rapport minimum devient inférieur au rapport actuel, alors que le signal de rétrogradage multiple est toujours positif.

Selon un mode de réalisation avantageux, l'unité de commande électronique est configurée pour calculer le rapport de transmission minimum, à partir de données comprenant la vitesse des roues du véhicule, et le rapport actuellement engagé sur la boîte de vitesses.

Selon un autre aspect, on propose un véhicule équipé d'au moins une palette de passage de vitesses au volant et d'une boîte de transmission automatique commandée par un dispositif tel que décrit précédemment, le dispositif étant apte à recevoir des signaux de commande de la palette.

Il est également proposé un procédé de gestion d'une boîte de vitesse automatique, dans lequel on déclenche une temporisation lorsqu'un premier actionneur de commande de la boîte est activé, on maintient cette temporisation tant que cet actionneur est activé, et on émet un signal de rétrogradage multiple positif si et seulement si la temporisation atteint successivement une première borne de temps et une seconde borne de temps, et qu'une pédale de frein et l'actionneur restent activés en continu entre la première borne de temps et la seconde borne de temps.

De manière préférentielle, on maintient le signal de rétrogradage multiple positif pendant toute la durée où l'actionneur reste activé au-delà de la seconde borne de temps.

Selon un mode de réalisation particulièrement avantageux, on effectue un ou plusieurs rétrogradages multiples, à chaque fois jusqu'à un rapport minimal autorisé calculé juste avant le changement de rapport, tant que le signal de rétrogradage multiple est positif.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue d'ensemble simplifiée d'un véhicule équipé d'un dispositif de commande selon l'invention ;
- la figure 2 est un algorithme de fonctionnement d'une partie d'un dispositif de commande selon l'invention ;
- la figure 3 est un autre algorithme de fonctionnement de la même partie d'un dispositif de commande selon l'invention, et
- la figure 4 est un schéma électronique simplifié de fonctionnement d'une autre partie d'un dispositif de commande selon l'invention.

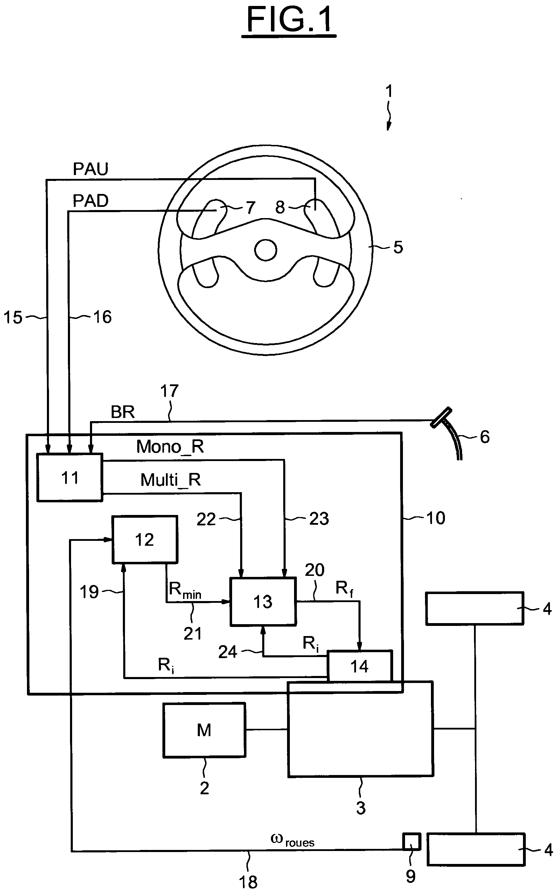

Tel qu'illustré sur la figure 1, un véhicule 1 comprend un moteur 2 relié à une boîte de vitesses 3 permettant d'entraîner des roues motrices 4 du véhicule.

Le véhicule est équipé d'un capteur de vitesse de rotation 9 d'une roue du véhicule, qui peut être placé sur une roue motrice ou de préférence sur une roue non motrice. Il comprend une pédale de frein 6, un volant de direction 5, muni d'une première palette 7 dédiée aux changements de rapport descendants et d'une seconde palette 8 dédiée aux changements de rapport montants.

Le véhicule 1 est équipé d'une unité de commande électronique 10 qui comprend un premier calculateur 11, un second calculateur 12, un troisième calculateur 13 et un quatrième calculateur 14. Le premier calculateur 11 reçoit par une connexion 15 un signal PAU (« Paddle Up ») qui peut par exemple être un signal de type booléen, qui devient positif lorsque la seconde palette 8 est actionnée.

Le premier calculateur 11 reçoit de même par une connexion 16 un signal PAD (« Paddle Down ») qui peut par exemple être un signal booléen qui devient positif lorsque la première palette 7 est actionnée.

Les palettes sont typiquement de petits leviers à retour élastique situés derrière la volant, et que le conducteur peut soulever en direction du volant pour émettre des signaux PAU ou PAD.

Dans la suite de la description, on considère que l'on appuie sur les palettes pour les actionner, car la détection de l'actionnement peut être notamment effectuée par la fermeture d'un contacteur. En pratique, le conducteur appuie la palette vers soi, donc la "tire" en plaçant la main derrière la palette.

Selon d'autres variantes de réalisation, les deux palettes pourraient être remplacées par un levier unique ayant une position centrale d'équilibre vers laquelle il est ramené par une force de rappel élastique. Ce levier pourrait être déplacé dans une première direction pour émettre le signal PAD et dans une seconde direction pour émettre le signal PAU.

Ce levier pourrait par exemple être situé au niveau du tableau de bord, derrière le volant, ou être un levier de vitesse au plancher.

Le premier calculateur 11 reçoit également par une connexion 17 un signal BR qui peut par exemple être un signal booléen qui devient positif lorsque l'on enfonce la pédale de frein 6.

Le premier calculateur 11 transmet au troisième calculateur 13, respectivement par des connexions 22 et 23, des signaux booléens respectivement Multi_R et Mono_R. Le signal Multi_R peut être un signal booléen, qui, lorsqu'il devient positif, indique que la boîte de vitesses 3 doit effectuer un changement de rapport en descendant si possible de plusieurs rapports.

Le signal Mono_R est un signal booléen, qui lorsqu'il devient positif, indique que la boîte de vitesses automatique 3 doit effectuer un rétrogradage en descendant d'un rapport.

Le second calculateur 12 reçoit par une connexion 18 une vitesse ωᵣₒᵤₑₛ provenant du capteur de vitesse de rotation 9, et reçoit du quatrième calculateur 14 une valeur Rᵢ indiquant quel est le rapport de vitesse actuellement engagé sur la boîte de vitesses automatique 3. A partir de ces données, le second calculateur 12 délivre une valeur Rₘᵢₙ au troisième calculateur 13. Le calculateur reçoit également par une connexion 24, la valeur de rapport actuellement engagé Rᵢ délivrée par le quatrième calculateur 14. La valeur Rₘᵢₙ indique quel est le rapport le plus bas vers lequel on peut autoriser la boîte de vitesses 3 à descendre sans provoquer une augmentation de régime du moteur 2 qui ferait passer ce régime au dessus d'un régime maximal autorisé.

A partir des valeurs booléennes Mono_R, Multi_R et du rapport Rₘᵢₙ, et du rapport actuel Rᵢ, le troisième calculateur 13 délivre au quatrième calculateur 14 une valeur R_{f} correspondant au rapport final auquel doit descendre la boîte de vitesses 3.

Le calculateur 14 gère en fonction de la valeur R_{f} le changement de rapport vers le rapport correspondant. Il gère les ouvertures et fermetures d'embrayages appartenant à la boîte de vitesses 3. Il gère également les déplacements des différents éléments associés au réducteur de la boîte de vitesses 3, ainsi que les phases de synchronisation du moteur 2 pour amener la boîte de vitesses automatique 3 du rapport actuel Rᵢ au rapport final R_{f}.

L'invention portant essentiellement sur les changements de rapport descendants, sur la figure 1, les principales variables correspondant à ce type de changements de rapport ont été représentées. En toute logique, le premier calculateur 11 émet également vers le calculateur 13 des variables booléennes lui indiquant si un changement de rapport montant, simple, ou montant multiple est requis. Le second calculateur 12 émet vers le troisième calculateur 13 une valeur Rₘₐₓ indiquant le rapport le plus élevé auquel on peut, un instant donné, amener la boîte de vitesses 3 sans faire chuter le régime du moteur 2 en deçà d'un régime minimal autorisé. Les valeurs Rₘₐₓ et les variables booléennes associées aux requêtes de changement de rapport montant simple ou multiple servent à calculer le rapport final requis R_{f} lorsque c'est la seconde palette 8 et non la première palette 7 qui est actionnée. On peut également imaginer des variables de réalisation dans lesquelles on autorise les changements de rapports descendant multiples selon la procédure décrite dans la présente description, mais dans lesquelles les rapports montants sont gérés de manière différente, par exemple toujours de forme de changement de rapport simple. Dans la suite du texte, sauf précision contraire, le terme "palette" désigne la première palette 7.

L'invention, afin de ne pas déclencher des rétrogradages intempestifs, liés à un appui prolongé de la palette 7 sans réelle volonté de rétrogradage du conducteur, propose de ne déclencher un rétrogradage multiple que si la pédale de frein et la première palette sont actionnées simultanément pendant une durée minimale.

L'actionnement de la pédale de frein nécessitant un geste plus ample et un travail plus important du conducteur, on autorise un léger retard de l'appui de la pédale de frein par rapport à l'appui sur la première palette 7.

En pratique, quand un appui sur la première palette 7 est détecté, on laisse passer un premier intervalle de temps T₁, si après cet intervalle de temps T₁, la palette et la pédale de frein sont actionnées simultanément, on continue à surveiller si la palette et la pédale de frein continuent à être actionnées, jusqu'à ce que le compteur atteigne un seuil de temps T₂. L'intervalle de temps T₁ peut être typiquement compris entre 0 et 200 millisecondes, et l'intervalle de temps T₂ peut être typiquement compris entre 0 et 1 seconde.

Si la palette et la pédale de frein restent effectivement actionnées jusqu'au seuil de temps T₂, la variable Multi_R est basculée à 1.

Une fois basculée à 1, cette variable Multi_R est maintenue à la valeur 1 tant que la première palette 7 reste actionnée, même si entre temps la pédale de frein a été relâchée.

Lorsque la variable Multi_R est positive, le calculateur 14 pilote la boîte de vitesses 3 pour l'amener au rapport final R_{f}. Lorsqu'il a amené la boîte de vitesses au rapport R_{f}, si le signal Multi_R est toujours positif, le calculateur 14 peut vérifier si en fonction des nouvelles vitesses de rotation de roues ωᵣₒᵤₑₛ et du nouveau rapport engagé, le troisième calculateur 13 lui délivre une valeur de rapport final R_{f} plus faible que le rapport actuellement engagé.

Dans ce cas, le calculateur 14 peut effectuer un rétrogradage supplémentaire d'un ou plusieurs rapports suivant la nouvelle valeur finale de R_{f}.

Lorsque la première palette 7 cesse d'être actionnée, la variable Multi_R rebascule à zéro.

La variable Mono_R, elle, est basculée à 1, si un appui est détecté sur la première palette mais que les conditions d'appui simultanées de la première palette 7 et de la pédale de frein 6 sur la durée de tout l'intervalle de temps [T₁ T₂] ne sont pas vérifiées. Un critère de temps d'appui minimal sur la première palette 7 peut être fixé. Le temps d'appui minimal peut par exemple être pris égal à T₁, ou choisi égal à une autre valeur supérieure ou inférieure à T₁.

La valeur Mono_R peut être limitée à une impulsion unique, et peut être remise à zéro presque immédiatement une fois qu'elle a été détectée par le troisième calculateur 13. Dans le raisonnement qui précède comme dans le raisonnement qui suit, on considère que les signaux PAD, PAU et BR sont déjà des signaux filtrés, et peuvent être considérés comme des variables booléennes qui prennent soit une valeur proche de zéro quand la variable booléenne est "négative " ou "fausse", soit une valeur de valeur absolue supérieure à un certain seuil quand elles la variable booléenne est "positive" ou vrai".

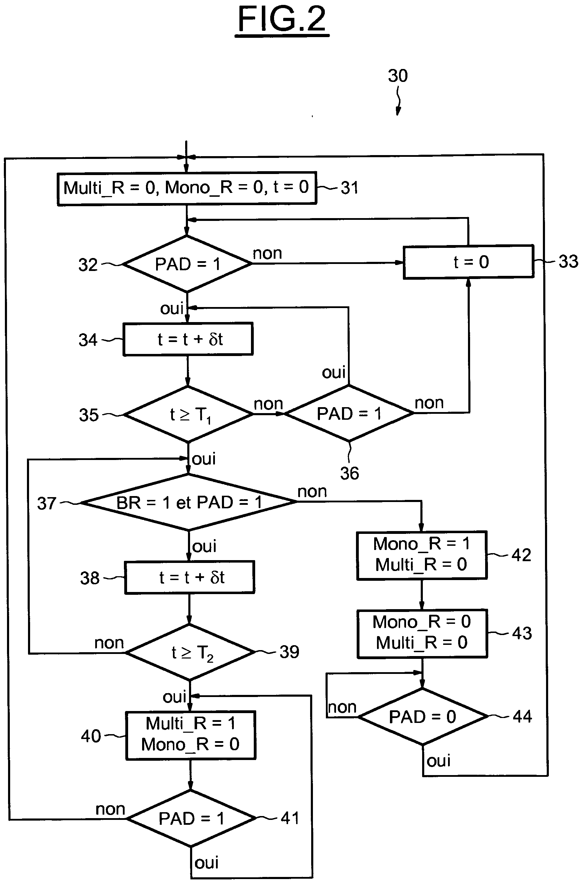

La figure 2 illustre un exemple d'algorithme 30 de fonctionnement du premier calculateur 11 de la figure 1. Lors d'une étape d'initialisation 31, les variables Multi_R, Mono_R et une variable de compteur de temps t sont mises à zéro. On effectue ensuite un test 32 vérifiant si la première palette 7 est actionnée. Si la réponse est négative, on vérifie que le compteur de temps t est toujours nul à une étape 33 et on réeffectue le test 32.

Si la palette 7 est actionnée, on incrémente à une étape 34 le compteur t d'un incrément δt. On effectue ensuite un test pour vérifier si le compteur t est devenu supérieur ou égal à un premier seuil T₁. Si ce n'est pas le cas, on effectue un test 36 pour vérifier si la première palette 7 est actionnée et si elle l'est, on réincrémente à une nouvelle étape 34 le compteur t.

Si la palette n'est plus actionnée, on réinitialise le compteur de temps t à l'étape 33 et on revient à l'étape de test 32. Quand le compteur de temps t devient supérieur au seuil T₁, on commence à vérifier à une étape 37 si simultanément, la première palette 7 est actionnée et la pédale de frein 6 est également actionnée.

Si c'est le cas, on continue à incrémenter le compteur de temps t à une étape 38 et on vérifie à une étape 39 si le compteur de temps t est devenu supérieur ou égal à un seuil T₂.

Si ce n'est pas le cas, on continue à vérifier, à l'étape 37, si la palette et le frein sont simultanément actionnés et si c'est le cas on incrémente à l'étape 38 le compteur de temps t jusqu'à ce qu'il devienne supérieur au seuil T₂.

On fait alors basculer à une étape 40 la valeur Multi_R à 1, tout en maintenant la valeur Mono_R à 0. On vérifie alors à une étape 41 si la palette est toujours actionnée, et dans ce cas, on maintient la variable Multi_R à 1. Si elle n'est plus actionnée, on revient à l'étape d'initialisation 31.

Si, à l'étape 37, la palette ou le frein cessent d'être actionnés avant que le compteur de temps t ait atteint le seuil T₂, on fait basculer à l'étape 42 la variable Mono_R à 1, en maintenant la variable Multi_R à 0. La valeur Mono_R est ainsi maintenue à 1 pendant une durée prédéfinie, ou juste le temps d'une impulsion ponctuelle, et rebascule à zéro à une étape 43.

On effectue alors un test 44 pour voir si la première palette 7 a été relâchée. On continue à effectuer le test jusqu'à ce que la valeur PAD rebascule à 0, puis on retourne à l'étape d'initialisation 31.

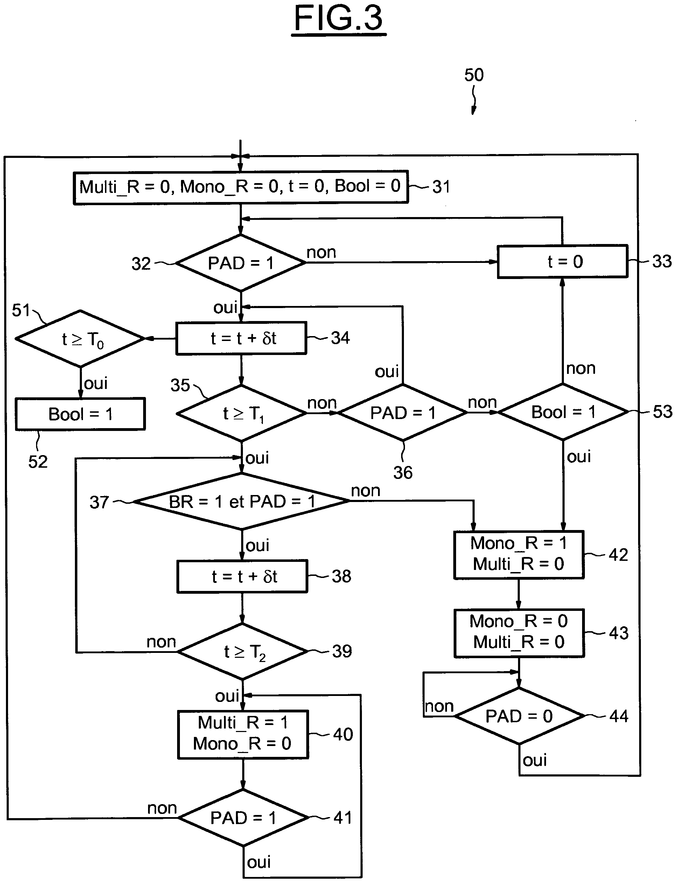

La figure 3 est une variante 50 d'algorithme de fonctionnement du calculateur 11 de la figure 1 On retrouve dans cet algorithme des étapes communes à l'algorithme 30 de la figure 2, désignées par les mêmes références. Dans l'algorithme 50 de la figure 3, le basculement (étape 42) de la variable Mono_R vers une valeur positive, est conditionné par une variable booléenne "Bool". Cette variable booléenne est initialisée à zéro lors de l'étape d'initialisation 31, et est basculée à 1 lorsque, suite aux incrémentations 34 du compteur t, on effectue un test 51 indiquant que ce compteur t est devenu supérieur ou égal à un seuil T₀.

Dans ce mode de réalisation, la durée minimale T₀ pendant laquelle la première palette doit être appuyée pour activer la variable Mono_R est différente du premier seuil T₁, représentant le décalage autorisé entre le signal de frein BR et le signal de palette PAD. Ainsi, lorsque la variable PAD cesse d'être égale à 1 lors des tests 36, on regarde si la variable booléenne "Bool" est égale à 1 lors d'un test 53. Si elle est égale à 1, cela signifie que la variable PAD est restée égale à 1 pendant au moins la durée T₀. On bascule alors la variable Mono_R à 1. Si le test 53 est négatif, on réinitialise le compteur de temps à zéro et on maintient les deux variables Multi-R et Mono_R à zéro.

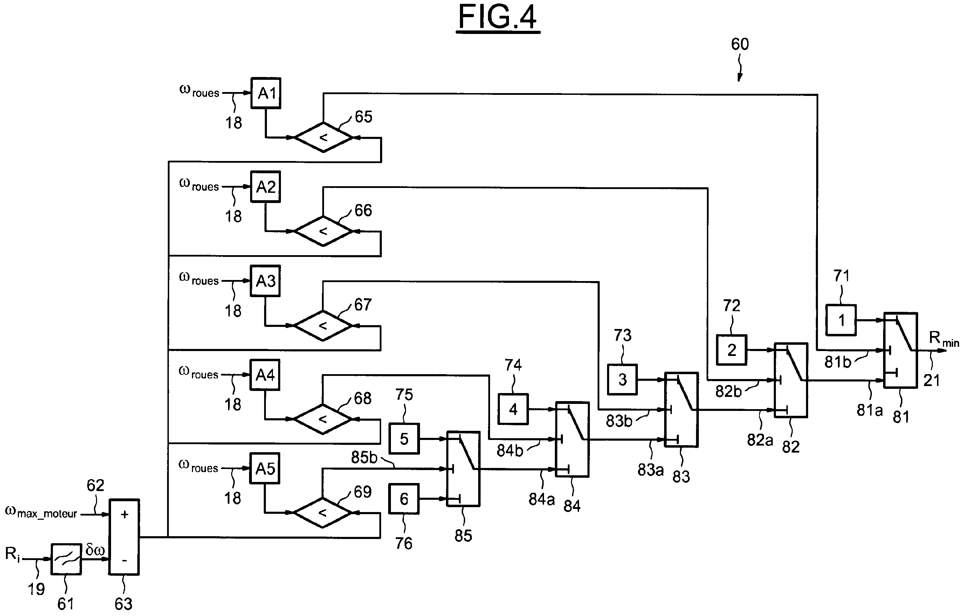

La figure 4 illustre un schéma électronique simplifié de fonctionnement du second calculateur 12. Une partie du calculateur 12 y est représentée sous forme d'un schéma fonctionnel 60 comportant des opérateurs, qui peuvent par exemple être des composants électroniques. Le circuit 60 comporte notamment une case mémoire 62 dans laquelle est stockée une valeur maximale ω_{max_moteur} représentant un seuil de régime de rotation du moteur 2 qui ne doit pas être dépassé.

Ce seuil est pondéré par une cartographie 61 permettant de lire, en fonction de la valeur Rᵢ de rapport actuellement engagé sur la boîte de vitesse 3, et arrivant par la connexion 19, un écart de régime δω. L'écart δω arrive sur l'entrée négative d'un soustracteur 63 recevant sur son entrée positive la valeur ω_{max_moteur}.

A la sortie du soustracteur 63, on obtient ainsi une valeur du régime de rotation que l'on ne souhaite pas dépasser pour le moteur 2, et qui est pondéré en fonction du rapport Rᵢ actuellement engagé sur la boîte de vitesses 3. Typiquement, l'écart δω est d'autant plus élevé que le rapport engagé est élevé, et peut être compris entre 0 et 1000 tours par minute. Ainsi, pour un moteur apte à tourner au maximum aux alentours de 6500 tours/minute, on ne s'autorisera par exemple qu'un régime maximal de rotation que de l'ordre de 5700 tours/minute en rétrogradant à partir du troisième rapport et un régime de rotation maximale de l'ordre de 5500 tours/minute en rétrogradant à partir du quatrième rapport.

La valeur obtenue en sortie du soustracteur 63, est comparée à différentes valeurs de régime de rotation obtenues respectivement en sortie de calculateurs A1, A2, A3, A4 et A5. Les calculateurs A1, A2, A3, A4 et A5 calculent à partir de la vitesse ωᵣₒᵤₑₛ de rotation des roues, arrivant par la connexion 18 sur chacun des ces calculateurs, un régime de rotation cible auquel devrait tourner le moteur 2 si, respectivement, le premier, le second, le troisième, le quatrième ou le cinquième rapport était instantanément engagé avec la vitesse de rotation actuelle ωᵣₒᵤₑₛ des roues.

Ainsi, un premier comparateur 65 compare un régime cible délivré par le calculateur A1 correspondant à un basculement théorique en première vitesse, et la sortie du soustracteur 63 donnant le régime moteur seuil à ne pas dépasser.

La valeur du test logique « le régime cible en première est-il inférieur au régime maximal autorisé » est envoyée sur l'entrée d'un commutateur logique 81. Ce commutateur est configuré de manière à être dans la position représentée sur la figure 4. La sortie 21 délivre une valeur Rₘᵢₙ du commutateur. Cette sortie 21 est reliée par défaut à une première entrée numérique du commutateur contenant une case mémoire ou est enregistrée la valeur 1, symbolisant le premier rapport. Le commutateur comporte une seconde entrée numérique reliée par une connexion à la sortie 81 a d'un second commutateur logique 82, et comporte une troisième entrée booléenne 81b recevant le résultat du comparateur 65.

Si l'entrée du commutateur reçoit une valeur positive, la sortie 21 reste connectée à la case mémoire 71. Si l'entrée du commutateur reçoit une valeur "négative" ou "fausse", le commutateur bascule et connecte la sortie 21 avec la sortie 81 a du second commutateur 82.

Le commutateur 82 est de structure similaire à celle du commutateur 81. Il est lui-même connecté par une entrée booléenne 82b à un comparateur 66, par une première entrée numérique à une case mémoire 72 où est enregistrée la valeur 2 comme deuxième rapport, et par une seconde entrée numérique, à la sortie 82a d'un troisième commutateur 83. Le comparateur 66 vérifie si le régime cible délivré par le calculateur A2 est inférieur au régime moteur maximal délivré par le soustracteur 63. Si la réponse est négative, il provoque le basculement de la sortie 81a, connectée par défaut à la case mémoire 72, de manière à la relier à la sortie 82a du troisième commutateur 83.

Le commutateur 83 est de structure similaire à celle des commutateurs 81 et 82. Il est connecté par une entrée booléenne 83b à un comparateur 67, par une première entrée numérique à une case mémoire 73 où est enregistrée la valeur 3 symbolisant le troisième rapport, et par une seconde entrée numérique, à la sortie 83a d'un quatrième commutateur 84. Le comparateur 67 vérifie si le régime cible délivré par le calculateur A3 est inférieur au régime moteur maximal délivré par le soustracteur 63. Si la réponse est négative, il provoque le basculement de la sortie 82a, connectée par défaut à la case mémoire 73, de manière à la relier à la sortie 83a du quatrième commutateur 84.

Le commutateur 84 est de structure similaire à celle des commutateurs 81 à 83. Il est connecté par une entrée booléenne 84b à un comparateur 68, par une première entrée numérique à une case mémoire 74 où est enregistrée la valeur 4 symbolisant le quatrième rapport, et par une seconde entrée numérique, à la sortie 84a d'un cinquième commutateur 85. Le comparateur 68 vérifie si le régime cible délivré par le calculateur A4 est inférieur au régime moteur maximal délivré par le soustracteur 63. Si la réponse est négative, il provoque le basculement de la sortie 83a, connectée par défaut à la case mémoire 74, de manière à la relier à la sortie 84a du cinquième commutateur 85.

Le commutateur 85 est de structure similaire à celle des commutateurs 81 à 84. Il est connecté par une entrée booléenne 85b à un comparateur 69, par une première entrée numérique à une case mémoire 75 où est enregistrée la valeur 5 symbolisant le cinquième rapport, et par une seconde entrée numérique, à une case mémoire 76 où est enregistrée la valeur 6 symbolisant le sixième rapport, qui est ici le rapport le plus élevé disponible sur la boîte de vitesses 3. Le comparateur 69 vérifie si le régime cible délivré par le calculateur A5 est inférieur au régime moteur maximal délivré par le soustracteur 63. Si la réponse est négative, il provoque le basculement de la sortie 84a, connectée par défaut à la case mémoire 75, de manière à la relier à la case mémoire 76.

Autrement dit, chacun des calculateurs A1, A2, A3, A4, A5, délivre une valeur de régime cible, les valeurs de régimes cible étant décroissantes de A1 à A5. Si les résultats des comparateurs 65 à 68 sont tous positifs, c'est-à-dire que quel que soit le rapport engagé on ne dépasse pas le régime maximal autorisé du moteur, la sortie 21 du comparateur 81 reste connectée à la valeur 1.

Dans le cas contraire, un premier groupe de comparateurs délivre une valeur négative, et un second groupe de comparateurs délivre une valeur positive. Par exemple, les comparateurs 65 et 66 peuvent délivrer une valeur négative, et les comparateurs 67 à 69 peuvent délivrer une valeur positive.

Dans ce cas, la sortie 21 du commutateur 81 va basculer sur la sortie 81a du commutateur 82, qui va basculer sur la sortie 82a du commutateur 83. Celui-ci ne va pas basculer puisque la sortie du comparateur 67 est négative, et la sortie 21 du comparateur 81 sera au final connectée à la valeur 3, indiquant le rapport maximal auquel on peut descendre lors d'un rétrogradage de rapport multiple.

Le raisonnement peut être réitéré pour les différents cas de figure mettant en connexion la sortie 21 respectivement avec les cases mémoires 72, 74, ou 75.

Dans le cas où les valeurs de tous les comparateurs sont négatives, la sortie 21 vient se connecter avec la valeur 6 indiquant le rapport maximal disponible sur la boîte de vitesses 3.

Grâce au mode de pilotage de la boîte de vitesses proposé par l'invention, le calculateur 14 est apte à faire effectuer à la boîte de vitesses 3 un ou plusieurs rétrogradages multiples, permettant de descendre à chaque fois jusqu'au rapport minimal compatible avec le domaine de fonctionnement que l'on s'est fixé pour le moteur.

En outre, le contrôle d'un appui prolongé de la pédale de frein permet d'éviter de déclencher un rétrogradage de plusieurs rapports « à l'insu » du conducteur, suite soit à un appui involontairement trop prolongé de la palette, que ce soit du fait du conducteur ou du fait d'un aléas de détection au niveau de la palette 7.

L'invention ne se limite pas aux exemples de réalisation décrits et peut se décliner en de nombreuses variantes. Les schémas d'algorithmes comme les valeurs que l'on a choisi d'attribuer aux différentes variables booléennes, peuvent bien sûr être adaptés. On peut inverser les codages convenus pour certaines variables, et retrouver au final un schéma logique équivalent. On peut choisir de prolonger le signal Mono_R délivré au troisième calculateur, ou choisir de ne déclencher ce signal Mono_R qu'une fois la palette relâchée. Le seuil de temps T₀ nécessaire pour déclencher un signal Mon_R positif est compris dans l'intervalle ]0, T₂] : il peut être inférieur ou supérieur à T₁.

Les calculateurs 11, 12, 13, 14 peuvent être physiquement séparés, ou êtres des sous entités logiques d'une même unité de calcul physique.

La possibilité d'effectuer des rétrogradages multiples peut être débrayable, c'est-à-dire qu'on peut configurer le système pour que, suite à l'actionnement d'une commande dédiée du tableau de bord, un appui sur la palette 7 ne soit plus interprété à chaque fois que comme une demande de rétrogradage simple.

Le système de commande selon l'invention permet de mettre le véhicule dans une configuration de conduite « à sensation sportive » tout en préservant à la fois le moteur, qui reste dans sa plage de fonctionnement optimal, et en préservant la sécurité de conduite puisque les rétrogradages multiples ne sont déclenchés qu'avec la certitude qu'ils sont souhaités par le conducteur.

## Revendications

1. Dispositif de commande d'une boîte de vitesse (3) automatique, comprenant une unité de commande électronique (10) apte à détecter une demande d'un conducteur d'effectuer un rétrogradage simple d'un rapport de boîte ou un rétrogradage multiple de rapports de boîte, l'unité de commande étant configurée pour recevoir un premier signal booléen (BR) d'appui de pédale (6) de frein et un second signal booléen (PAD) d'appui d'un actionneur (7) à retour élastique, et pour délivrer un troisième signal booléen de demande de rétrogradage simple (Mono_R) et un quatrième signal booléen (Multi_R) de demande de rétrogradage multiple, **caractérisé en ce que** l'unité de commande électronique (10) déclenche une temporisation (t) lorsque l'actionneur est activé et la maintient tant que cet actionneur est activé, et émet un signal de rétrogradage multiple positif si et seulement si la temporisation atteint successivement une première borne de temps (T₁) et une seconde borne de temps (T₂) strictement supérieure à la première borne de temps, et si le frein et l'actionneur restent activés en continu entre la première borne de temps et la seconde borne de temps.

2. Dispositif de commande selon la revendication 1, dans lequel l'unité de commande (10) est configurée pour continuer à émettre un signal de rétrogradage multiple (Multi_R) positif pendant toute la durée où l'actionneur reste activé au-delà de la seconde borne de temps (T₂).

3. Dispositif de commande selon l'une des revendications précédentes, dans lequel l'unité de commande est configurée pour émettre un signal de rétrogradage simple (Mono_R) positif si la temporisation atteint une troisième borne (T₀) de temps mais n'atteint pas la seconde borne de temps (T₂), ou si la temporisation atteint la seconde borne de temps (T₂) mais que le frein n'est pas actionné en continu entre la première borne de temps et la seconde borne de temps, et pour ne pas émettre de signal de rétrogradage simple positif dans les autres cas de figure.

4. Dispositif de commande selon l'une des revendications précédentes, dans lequel l'unité de commande (10) est configurée pour n'émettre un signal booléen positif de rétrogradage simple (Mono_R) que sous forme d'une impulsion de durée prédéfinie.

5. Dispositif de commande selon l'une des revendications précédentes, dans lequel l'unité de commande (10) est reliée à un capteur (9) de vitesses de roues d'un véhicule (1) et est configurée pour calculer, lorsque le signal de rétrogradage multiple (Multi_R) est positif, un rapport de transmission minimum (Rₘᵢₙ) dans lequel elle autorise d'amener la boîte de vitesse (3), en fonction notamment de la vitesse de rotation des roues.

6. Dispositif de commande selon la revendication 5, dans lequel l'unité de commande (10) est configurée pour, si le signal de rétrogradage multiple (Multi_R) est positif, effectuer un premier rétrogradage pour amener la boîte de vitesse au rapport de transmission minimum (Rₘᵢₙ)calculé juste avant le changement de rapport.

7. Dispositif de commande selon la revendication 6, dans lequel l'unité de commande (10) est configurée pour, si le signal de rétrogradage multiple (Multi_R) reste positif après le premier rétrogradage, continuer à calculer le rapport de transmission minimum (Rₘᵢₙ), et pour effectuer un nouveau rétrogradage si ce rapport minimum (Rₘᵢₙ) devient inférieur au rapport actuel (Rᵢ) alors que le signal de rétrogradage multiple (Multi_R) est toujours positif.

8. Dispositif de commande selon l'une des revendications 5 à 7, dans lequel l'unité de commande électronique (10) est configurée pour calculer le rapport de transmission minimum (Rₘᵢₙ), à partir de données comprenant la vitesse (ωᵣₒᵤₑₛ) des roues du véhicule, et le rapport actuellement engagé (Rᵢ) sur la boîte de vitesses (3).

9. Véhicule équipé d'au moins une palette (7) de passage de vitesses au volant (5) et d'une boîte de transmission automatique(3) commandée par un dispositif selon l'une des revendications précédentes, apte à recevoir des signaux de commande de la palette (7).

10. Procédé de gestion d'une boîte de vitesse automatique (3), **caractérisé en ce qu'**il déclenche une temporisation (t) lorsqu'un premier actionneur (7) de commande de la boîte est activé, on maintient cette temporisation tant que cet actionneur est activé, et on émet un signal de rétrogradage multiple (Multi_R) positif si et seulement si la temporisation (t) atteint successivement une première borne de temps (T₁) et une seconde borne de temps (T₂), et qu'une pédale de frein (6) et l'actionneur (7) restent activés en continu entre la première borne de temps (T₁) et la seconde borne de temps (T₂).

11. Procédé de commande selon la revendication 10, dans lequel on maintient le signal de rétrogradage multiple (Multi_R) positif pendant toute la durée où l'actionneur reste activé au-delà de la seconde borne de temps (T₂).

12. Procédé de commande selon la revendication 11, dans lequel on effectue un ou plusieurs rétrogradages multiples, à chaque fois jusqu'à un rapport minimal autorisé (Rₘᵢₙ) calculé juste avant le changement de rapport, tant que le signal de rétrogradage multiple est positif.

## Patentansprüche

1. Vorrichtung zur Steuerung eines Automatikgetriebes (3), welche eine elektronische Steuereinheit (10) aufweist, die geeignet ist, eine Anforderung eines Fahrers, ein einfaches Herunterschalten um einen Gang oder ein Herunterschalten um mehrere Gänge durchzuführen, zu erkennen, wobei die Steuereinheit dafür ausgelegt ist, ein erstes Boolesches Signal (BR) der Betätigung eines Bremspedals (6) und ein zweites Boolesches Signal (PAD) der Betätigung eines Aktuators (7) mit Rückfederung zu empfangen und ein drittes Boolesches Signal der Anforderung einer einfachen Herunterschaltung (Mono_R) und ein viertes Boolesches Signal der Anforderung einer mehrfachen Herunterschaltung (Multi_R) zu liefern, **dadurch gekennzeichnet, dass** die elektronische Steuereinheit (10) eine Verzögerung (t) auslöst, wenn der Aktuator aktiviert wird, und sie so lange aufrechterhält, wie dieser Aktuator aktiviert ist, und ein positives Signal der mehrfachen Herunterschaltung dann und nur dann sendet, wenn die Verzögerung nacheinander eine erste Zeitgrenze (T₁) und eine zweite Zeitgrenze (T₂), die streng größer als die erste Zeitgrenze ist, erreicht, und wenn die Bremse und der Aktuator zwischen der ersten Zeitgrenze und der zweiten Zeitgrenze durchgehend aktiviert bleiben.

2. Vorrichtung zur Steuerung nach Anspruch 1, wobei die Steuereinheit (10) dafür ausgelegt ist, während der gesamten Dauer, während der der Aktuator über die zweite Zeitgrenze (T₂) hinaus aktiviert bleibt, weiterhin ein positives Signal der mehrfachen Herunterschaltung (Multi_R) zu senden.

3. Vorrichtung zur Steuerung nach einem der vorhergehenden Ansprüche, wobei die Steuereinheit dafür ausgelegt ist, ein positives Signal der einfachen Herunterschaltung (Mono_R) zu senden, falls die Verzögerung eine dritte Zeitgrenze (T₀) erreicht, jedoch die zweite Zeitgrenze (T₂) nicht erreicht, oder falls die Verzögerung die zweite Zeitgrenze (T₂) erreicht, die Bremse jedoch zwischen der ersten Zeitgrenze und der zweiten Zeitgrenze nicht durchgehend betätigt wird, und in den übrigen Fällen kein positives Signal der einfachen Herunterschaltung zu senden.

4. Vorrichtung zur Steuerung nach einem der vorhergehenden Ansprüche, wobei die Steuereinheit (10) dafür ausgelegt ist, ein positives Boolesches Signal der einfachen Herunterschaltung (Mono_R) nur in Form eines Impulses von vordefinierter Dauer zu senden.

5. Vorrichtung zur Steuerung nach einem der vorhergehenden Ansprüche, wobei die Steuereinheit (10) mit einem Sensor (9) der Raddrehzahlen eines Fahrzeugs (1) verbunden ist und dafür ausgelegt ist, wenn das Signal der mehrfachen Herunterschaltung (Multi_R) positiv ist, einen niedrigsten Getriebegang (Rₘᵢₙ) zu berechnen, in welchen sie das Getriebe (3) zu schalten gestattet, insbesondere in Abhängigkeit von der Drehzahl der Räder.

6. Vorrichtung zur Steuerung nach Anspruch 5, wobei die Steuereinheit (10) dafür ausgelegt ist, falls das Signal der mehrfachen Herunterschaltung (Multi_R) positiv ist, eine erste Herunterschaltung durchzuführen, um das Getriebe in den niedrigsten Getriebegang (Rₘᵢₙ) zu schalten, der unmittelbar vor dem Gangwechsel berechnet wurde.

7. Vorrichtung zur Steuerung nach Anspruch 6, wobei die Steuereinheit (10) dafür ausgelegt ist, falls das Signal der mehrfachen Herunterschaltung (Multi_R) nach der ersten Herunterschaltung positiv bleibt, damit fortzufahren, den niedrigsten Getriebegang (Rₘᵢₙ) zu berechnen, und eine erneute Herunterschaltung durchzuführen, falls dieser niedrigste Gang (Rₘᵢₙ) niedriger als der aktuelle Gang (Rᵢ) wird, während das Signal der mehrfachen Herunterschaltung (Multi_R) nach wie vor positiv ist.

8. Vorrichtung zur Steuerung nach einem der Ansprüche 5 bis 7, wobei die elektronische Steuereinheit (10) dafür ausgelegt ist, den niedrigsten Getriebegang (Rₘᵢₙ) ausgehend von Daten zu berechnen, welche die Drehzahl (**ω**_{Räder}) der Räder des Fahrzeugs und den Gang (Rᵢ), der gegenwärtig im Getriebe (3) eingelegt ist, beinhalten.

9. Fahrzeug, welches mit wenigstens einer Schaltwippe (7) am Lenkrad (5) und einem Automatikgetriebe (3), das von einer Vorrichtung nach einem der vorhergehenden Ansprüche gesteuert wird, die geeignet ist, Steuersignale von der Schaltwippe (7) zu empfangen, ausgestattet ist.

10. Verfahren zum Management eines Automatikgetriebes (3), **dadurch gekennzeichnet, dass** eine Verzögerung (t) ausgelöst wird, wenn ein erster Aktuator (7) zur Steuerung des Getriebes aktiviert wird, diese Verzögerung so lange aufrechterhalten wird, wie dieser Aktuator aktiviert ist, und ein positives Signal der mehrfachen Herunterschaltung (Multi_R) dann und nur dann gesendet wird, wenn die Verzögerung (t) nacheinander eine erste Zeitgrenze (T₁) und eine zweite Zeitgrenze (T₂) erreicht, und wenn ein Bremspedal (6) und der Aktuator (7) zwischen der ersten Zeitgrenze (T₁) und der zweiten Zeitgrenze (T₂) durchgehend aktiviert bleiben.

11. Vorrichtung zur Steuerung nach Anspruch 10, wobei das positive Signal der mehrfachen Herunterschaltung (Multi_R) während der gesamten Dauer aufrechterhalten wird, während der der Aktuator über die zweite Zeitgrenze (T₂) hinaus aktiviert bleibt.

12. Vorrichtung zur Steuerung nach Anspruch 11, wobei, solange das Signal der mehrfachen Herunterschaltung positiv ist, jedes Mal eine oder mehrere mehrfache Herunterschaltungen durchgeführt werden, bis zu einem zulässigen niedrigsten Gang (Rₘᵢₙ), der unmittelbar vor dem Gangwechsel berechnet wurde.

## Claims

1. Device for controlling an automatic gearbox (3), comprising an electronic control unit (10) capable of detecting a request from a driver to perform a single gear downshift or a multiple gear downshift, the control unit being configured in order to receive a first Boolean signal (BR) associated with brake pedal (6) pressure and a second Boolean signal (PAD) associated with pressure on a spring-back actuator (7), and in order to deliver a third Boolean signal requesting a single downshift (Mono_R) and a fourth Boolean signal (Multi_R) requesting a multiple downshift, wherein the electronic control unit (10) triggers a time delay (t) when the actuator is actuated, and maintains it for as long as this actuator is activated, and emits a positive multiple downshift signal if and only if the time delay successively reaches a first time limit (T₁) and a second time limit (T₂) strictly greater than the first time limit, and if the brake and the actuator remain activated continuously between the first time limit and the second time limit.

2. Control device according to Claim 1, wherein the control unit (10) is configured in order to continue to emit a positive multiple downshift signal (Multi_R) throughout the time in which the actuator remains activated beyond the second time limit (T₂) .

3. Control device according to one of the preceding claims, wherein the control unit is configured in order to emit a positive single downshift signal (Mono_R) if the time delay reaches a third time limit (T₀) but does not reach the second time limit (T₂), or if the time delay reaches the second time limit (T₂) but the brake is not actuated continuously between the first time limit and the second time limit, and in order not to emit a positive single downshift signal in other possible cases.

4. Control device according to one of the preceding claims, wherein the control unit (10) is configured in order to emit a positive single downshift Boolean signal (Mono_R) only in the form of a pulse of predefined duration.

5. Control device according to one of the preceding claims, wherein the control unit (10) is connected to a vehicle (1) wheel speed sensor (9), and is configured in order to calculate, when the multiple downshift signal (Multi_R) is positive, a minimum transmission ratio (Rₘᵢₙ) which it allows the gearbox (3) to adopt, in particular as a function of the rotation speed of the wheels.

6. Control device according to Claim 5, wherein the control unit (10) is configured in order, if the multiple downshift signal (Multi_R) is positive, to perform a first downshift in order to bring the gearbox to the minimum transmission ratio (Rₘᵢₙ) calculated just before the gear change.

7. Control device according to Claim 6, wherein the control unit (10) is configured in order, if the multiple downshift signal (Multi_R) remains positive after the first downshift, to continue to calculate the minimum transmission ratio (Rₘᵢₙ), and to perform a new downshift if this minimum ratio (Rₘᵢₙ) becomes less than the current ratio (Rᵢ) while the multiple downshift signal (Multi_R) is still positive.

8. Control device according to one of Claims 5 to 7, wherein the electronic control unit (10) is configured in order to calculate the minimum transmission ratio (Rₘᵢₙ) on the basis of data comprising the speed (ω_{wheels}) of the wheels of the vehicle and the gear (Rᵢ) currently engaged in the gearbox (3).

9. Vehicle equipped with at least one paddle shifter (7) on the steering wheel (5) and an automatic transmission box (3) controlled by a device according to one of the preceding claims, capable of receiving control signals from the paddle (7).

10. Method for managing an automatic gearbox (3), **characterized in that** it triggers a time delay (t) when a first gearbox control actuator (7) is actuated, this time delay is maintained for as long as this actuator is actuated, and a positive multiple downshift signal (Multi_R) is emitted if and only if the time delay successively reaches a first time limit (T₁) and a second time limit (T₂) , and if a brake pedal (6) and the actuator (7) remain activated continuously between the first time limit (T₁) and the second time limit (T₂) .

11. Control method according to Claim 10, wherein the positive multiple downshift signal (Multi_R) is maintained throughout the time in which the actuator remains activated beyond the second time limit (T₂) .

12. Control method according to Claim 11, wherein one or more multiple downshifts are performed, in each case until a lowest allowed gear (Rₘᵢₙ) calculated just before the gear change is reached, so long as the multiple downshift signal is positive.
